# EUROPEAN PATENT APPLICATION

(11) **EP 4 632 589 A1**
(43) Date of publication of application: **15.10.2025**
(21) Application number: 23899511.2
(22) Date of filing: 07.09.2023
(51) Int. Cl.: G06F 13/38

(54) **MULTI-CHANNEL DATA BONDING METHOD, APPARATUS AND SYSTEM, AND COMPUTER-READABLE STORAGE MEDIUM**

(30) Priority: 07.12.2022 CN 202211567417
(71) Applicant: Shenzhen Pango Microsystems Co., Ltd, Shenzhen, Guangdong 518000 (CN)
(72) Inventor: GUO, Haitao, Shenzhen, Guangdong 518000 (CN); LI, Ning, Shenzhen, Guangdong 518000 (CN)
(74) Representative: Plavsa, Olga
(86) International application number: PCT/CN2023/117513
(87) International publication number: WO 2024/119928

(57) **Abstract**

A multi-channel data bonding method, apparatus and system, and a computer-readable storage medium. The method includes: using a receive clock of a target transmit channel of multiple transmit channels as a transmit clock of each of other transmit channels of the multiple transmit channels; acquiring a receive clock of each of the multiple transmit channels; generating identification data of each of the multiple transmit channels; obtaining a shift value of each of the multiple transmit channels, by performing phase detection on the identification data of the transmit channel according to the transmit clock and the receive clock of the transmit channel; receiving parallel data of each of the multiple transmit channels; and shifting the parallel data of each of the multiple transmit channels according to the shift value of the transmit channel, thereby obtaining shifted data. With this method, a data transmission rate can be improved, and the performance and reliability of chip can be improved.

## Description

### CROSS-REFERENCE OF RELATED APPLICATION

This application claims priority to Chinese Patent Application No. 2022115674177, filed on December 7, 2022, and the entire contents of which are incorporated herein by reference for all purposes.

### TECHNICAL FIELD

The present disclosure relates to the field of data transmission, and particularly to a multi-channel data bonding method, apparatus and system, and a computer-readable storage medium.

### BACKGROUND

In SERializer/DESerializer intellectual property (Serdes IP), channel (lane) bonding is a common function that needs to be supported. Serdes IP is mainly composed of a physical coding sublayer (PCS) and physical media attachment (PMA). When the data to be transmitted exceeds the carrying capacity of one serial link, multiple links need to be used simultaneously to transmit the data in parallel. In the existing channel bonding technology, the serial data is aligned in the PMA, which needs to be implemented in the analog part of the PMA; in addition, by adjusting the clock phase of the receive clock, the data is switched from the main channel clock to the clock domain of the receive clock, and the serial data are output by multiple channels simultaneously. However, in this technology, the clock frequency cannot be too high, otherwise the phase adjustment would be inaccurate, which affects the data transmission rate.

### SUMMARY

In view of at least some of the shortcomings or defects in the prior art, the present disclosure provides a multi-channel data bonding method, a multi-channel data bonding apparatus, a multi-channel data bonding system and a computer-readable storage medium, which improve the data transmission rate and improve performance and reliability of chip.

In one aspect, the embodiments of the present disclosure provide a multi-channel data bonding method, which for example includes: using a receive clock of a target transmit channel of a plurality of transmit channels as a transmit clock of each of other transmit channels of the plurality of transmit channels; acquiring a receive clock of each of the plurality of transmit channels; generating identification data of each of the plurality of transmit channels; obtaining a shift value of each of the plurality of transmit channels, by performing phase detection on the identification data of the transmit channel according to the transmit clock and the receive clock of the transmit channel; receiving parallel data of each of the plurality of transmit channels; and shifting the parallel data of each of the plurality of transmit channels according to the shift value of the transmit channel, thereby obtaining shifted data.

Preferably, the obtaining a shift value of each of the plurality of transmit channels, by performing phase detection on the identification data of the transmit channel according to the transmit clock and the receive clock of the transmit channel, includes: detecting a phase difference between the receive clock of the target transmit channel and the identification data of the target transmit channel, and determining the number of bonded pulses for the receive clock of the target transmit channel; detecting a phase difference between the transmit clock of the target transmit channel and the identification data of the target transmit channel, and determining the number of bonded pulses for the transmit clock of the target transmit channel; and determining a shift value of the target transmit channel, according to the number of bonded pulses for the receive clock and the number of bonded pulses for the transmit clock.

Preferably, the detecting a phase difference between the receive clock of the target transmit channel and the identification data of the target transmit channel and determining the number of bonded pulses for the receive clock of the target transmit channel includes: outputting a first bonding pulse signal, and counting the first bonding pulse signal; shifting the identification data according to the first bonding pulse signal; and recording a counted number of the first bonding pulse signal obtained when the identification data is aligned, as the number of bonded pulses for the receive clock.

Preferably, the detecting a phase difference between the transmit clock of the target transmit channel and the identification data of the target transmit channel and determining the number of bonded pulses for the transmit clock of the target transmit channel includes: outputting a second bonding pulse signal, and counting the second bonding pulse signal; shifting the identification data according to the second bonding pulse signal; and recoding a counted number of the second bonding pulse signals obtained when the identification data is aligned, as the number of bonded pulses for the receive clock.

Preferably, the determining a shift value of the target transmit channel according to the number of bonded pulses for the receive clock and the number of bonded pulses for the transmit clock includes: obtaining, through comparison, a pulse number difference between the number of bonded pulses for the receive clock and the number of bonded pulses for the transmit clock; and determining the shift value, according to the pulse number difference and a preset shift value range.

Preferably, the shifting the parallel data of each of the plurality of transmit channels according to the shift value of the transmit channel and thereby obtaining shifted data, includes: obtaining combined data, by performing combination processing according to the shift value, parallel data of a current clock cycle, and parallel data of a previous clock cycle before the current clock cycle; and converting a clock of the combined data from the transmit clock to the receive clock.

Preferably, the obtaining combined data by performing combination processing according to the shift value, parallel data of a current clock cycle and parallel data of a previous clock cycle before the current clock cycle, includes: acquiring multi-bit data from previous cycle data of the previous clock cycle before the current clock cycle, where the number of bits of the multi-bit data is equal to the shift value; and obtaining the combined data by combining the multi-bit data with current cycle data of the current clock cycle.

In another aspect, the embodiments of the present disclosure provide a multi-channel data bonding apparatus, which is used to execute the multi-channel data bonding method as described in any of the above items. The multi-channel data bonding apparatus includes: a channel clock unifying module, configured to use a receive clock of a target transmit channel of a plurality of transmit channels as a transmit clock of each of other transmit channels of the plurality of transmit channels; a receive clock acquiring module, configured to acquire a receive clock of each of the plurality of transmit channels; an identification data generating module, configured to generate identification data of each of the plurality of transmit channels; a shift value determining module, configured to obtain a shift value of each of the plurality of transmit channels, by performing phase detection on the identification data of the transmit channel according to the transmit clock and the receive clock of the transmit channel; a parallel data receiving module, configured to receive parallel data of each of the plurality of transmit channels; and a parallel data shifting module, configured to shift the parallel data of each of the plurality of transmit channels according to the shift value of the transmit channel, thereby obtaining shifted data.

In a further aspect, the embodiments of the present disclosure provide a multi-channel data bonding system, which includes a processor and a memory connected to the processor. The memory store instructions executable by the processor, and the instructions cause the processor to perform operations to implement the multi-channel data bonding method as described in any one of the above items.

In yet a further aspect, the embodiments of the present disclosure provide a computer-readable storage medium, which is a non-volatile memory and stores computer-executable instructions. The computer-executable instructions are used to implement the multi-channel data bonding method as described in any one of the above items.

In the embodiments of the present disclosure, phase detection is performed on identification data of multiple transmit channels to obtain shift values, and shift processing is performed on parallel data according to the shift values; as such, the serial data output by the multiple transmit channels are aligned. This reduces the difficulty of implementing clock phase adjustment, and effectively reduces the logic complexity and timing requirements of internal digital design. In addition, it avoids the limitation that the clock frequency cannot be too high in the existing scheme of bonding multiple transmit channels, improves the data transmission rate, and improves the performance and reliability of chip.

### BRIEF DESCRIPTION OF THE DRAWINGS

In order to more clearly illustrate the technical solutions in the embodiments of the present disclosure, drawings required for the description of the embodiments will be briefly introduced below. Apparently, the drawings described below are only some rather than all embodiments of the present disclosure. Based on the embodiments of the present disclosure, all other embodiments and drawings obtained by those of ordinary skills in the art without creative work shall fall within the scope of protection of the present disclosure.
FIG. 1 is a schematic flowchart of a multi-channel data bonding method provided in a first embodiment of the present disclosure.
FIG. 2 is a detailed flowchart for step S40 in FIG. 1.
FIG. 3 is a detailed flowchart for step S41 in FIG. 2.
FIG. 4 is a detailed flowchart for step S43 in FIG. 2.
FIG. 5 is a detailed flowchart for step S45 in FIG. 2.
FIG. 6 is a detailed flowchart for step S60 in FIG. 1.
FIG. 7 is a detailed flowchart for step S61 in FIG. 6.
FIG. 8 is a structural schematic diagram of a hardware architecture for implementing the multi-channel data bonding method in the first embodiment of the present disclosure.
FIG. 9 is a schematic diagram illustrating the architecture of the PMA in FIG. 8.
FIG. 10 is a schematic diagram illustrating the architecture of a channel in FIG. 9.
FIG. 11 is a schematic diagram illustrating a detailed architecture of the PMA in the first embodiment of the present disclosure.
FIG. 12 is a module diagram of a multi-channel data bonding apparatus provided in a second embodiment of the present disclosure.
FIG. 13 is a structural schematic diagram of a multi-channel data bonding system provided in a third embodiment of the present disclosure.
FIG. 14 is a structural schematic diagram of a computer-readable storage medium provided in a fourth embodiment of the present disclosure.

### DETAILED DESCRIPTION OF PREFERRED EMBODIMENTS

The technical solutions provided by the present disclosure are further described in detail below in conjunction with the accompanying drawings. It is understandable that the specific embodiments described herein are only used to illustrate the present disclosure.

### [First embodiment]

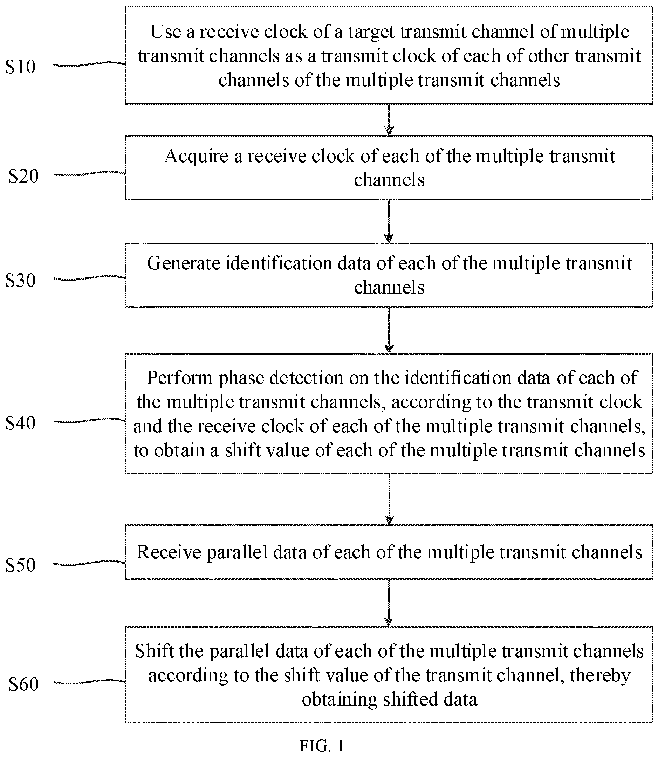

As illustrated in FIG. 1, the first embodiment of the present disclosure provides a multi-channel data bonding method. Specifically, the multi-channel data bonding method provided in the embodiment of the present disclosure includes steps S10-S60 as follows.

At S10, a receive clock of a target transmit channel of multiple transmit channels is used as a transmit clock of each of other transmit channels of the multiple transmit channels.

At S20, a receive clock of each of the multiple transmit channels is acquired.

At S30, identification data of each of the multiple transmit channels is generated.

At S40, phase detection is performed on the identification data of each of the multiple transmit channels, according to the transmit clock and the receive clock of each of the multiple transmit channels, to obtain a shift value of each of the multiple transmit channels.

At S50, parallel data of each of the multiple transmit channels is received.

At S60, the parallel data of each of the multiple transmit channels is shifted according to the shift value of the transmit channel, thereby obtaining shifted data.

In this way, in the embodiment of the present disclosure, phase detection is performed on identification data of multiple transmit channels to obtain shift values, and parallel data is shifted according to the shift values; as such, the serial data output by the multiple transmit channels are aligned. This reduces the difficulty of implementing clock phase adjustment, and effectively reduces the logic complexity and timing requirements of internal digital design. In addition, it avoids the limitation that the clock frequency cannot be too high in the existing scheme of bonding multiple transmit channels, improves the data transmission rate, and improves the performance and reliability of chip.

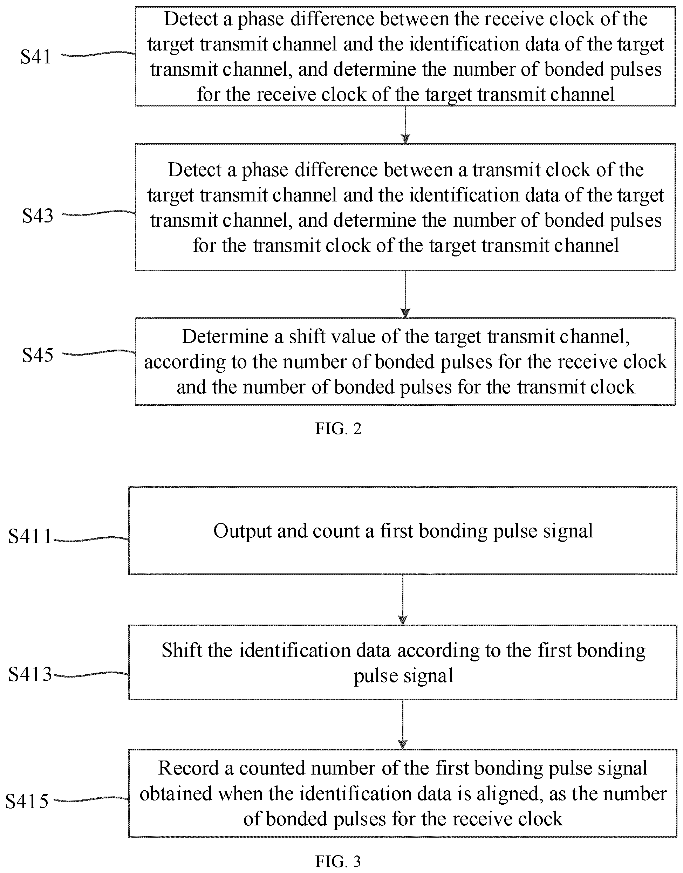

In addition, as illustrated in FIG. 2, step S40 may include for example steps S41-S45 as follows.

At S41, a phase difference between the receive clock of the target transmit channel and the identification data of the target transmit channel is detected, and the number of bonded pulses for the receive clock of the target transmit channel is determined.

At S43, a phase difference between a transmit clock of the target transmit channel and the identification data of the target transmit channel is detected, and the number of bonded pulses for the transmit clock of the target transmit channel is determined.

At S45, a shift value of the target transmit channel is determined, according to the number of bonded pulses for the receive clock and the number of bonded pulses for the transmit clock.

Further, as illustrated in FIG. 3, step S41 for example includes steps S411-S415 as follows.

At S411, a first bonding pulse signal is output and counted.

At S413, the identification data is shifted according to the first bonding pulse signal.

At S415, a counted number of the first bonding pulse signal obtained when the identification data is aligned is recorded as the number of bonded pulses for the receive clock.

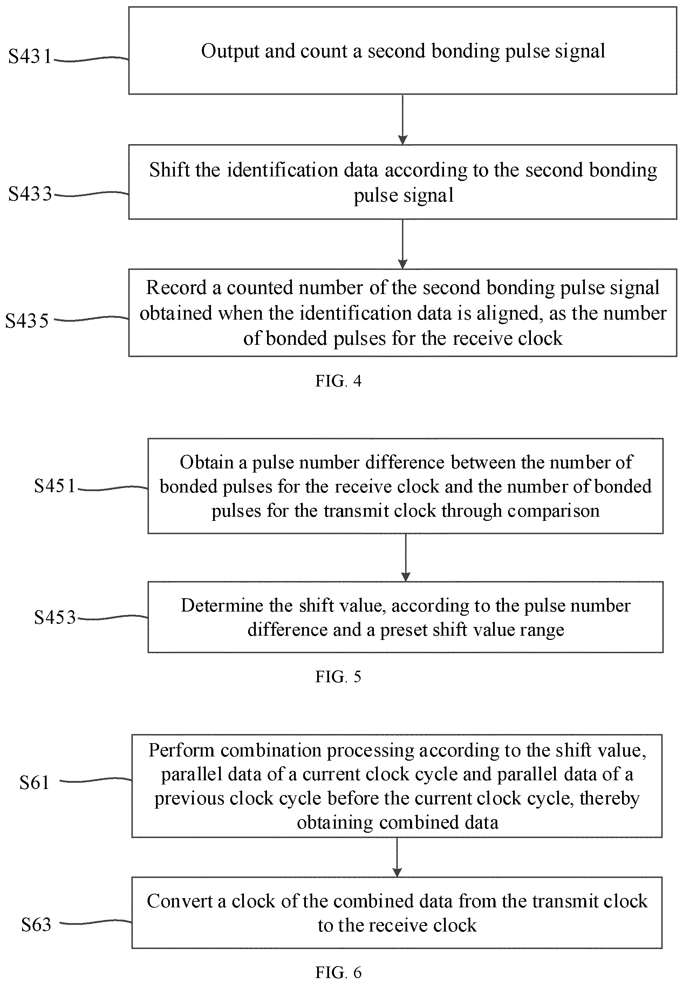

Similarly, as illustrated in FIG. 4, step S43 includes for example steps S431-S435 as follows.

At S431, a second bonding pulse signal is output and counted.

At S433, the identification data is shifted according to the second bonding pulse signal.

At S435, a counted number of the second bonding pulse signal obtained when the identification data is aligned is recorded as the number of bonded pulses for the receive clock.

In addition, as illustrated in FIG. 5, step S45 includes for example steps S451-S453 as follows.

At S451, a pulse number difference between the number of bonded pulses for the receive clock and the number of bonded pulses for the transmit clock is obtained through comparison.

At S453, the shift value is determined, according to the pulse number difference and a preset shift value range.

Furthermore, as illustrated in FIG. 6, step S60 includes for example steps S61-S63 as follows.

At S61, combination processing is performed, according to the shift value, parallel data of a current clock cycle and parallel data of a previous clock cycle before the current clock cycle, and combined data is thereby obtained.

At S63, a clock of the combined data is converted from the transmit clock to the receive clock.

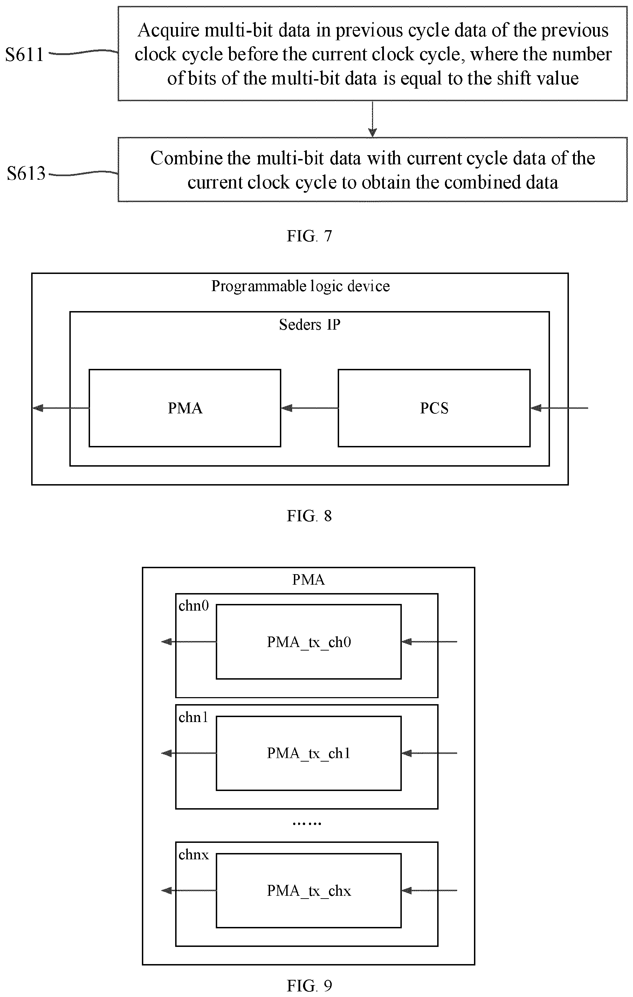

Based on the above, as illustrated in FIG. 7, step S61 includes for example steps S611-S613 as follows.

At S611, multi-bit data in previous cycle data of the previous clock cycle before the current clock cycle is acquired, where the number of bits of the multi-bit data is equal to the shift value.

At S613, the multi-bit data is combined with current cycle data of the current clock cycle to obtain the combined data.

To facilitate understanding of the multi-channel data bonding method of the present disclosure, each step of the multi-channel data bonding method will be described in detail below with reference to FIG. 8 to FIG. 11.

The multi-channel data bonding method provided in the embodiment of the present disclosure is applied to Serdes IP in a programmable logic device. Typically, the programmable logic device is for example Field Programmable Gate Array (FPGA). The basic structure of FPGA includes programmable input and output units, configurable logic blocks, digital clock management modules, embedded block RAM, wiring resources, embedded dedicated hard cores, bottom-level embedded functional units, etc. Many FPGAs have built-in one or more Multi-Gigabit Transceiver (MGT) transceivers, which also called Multi-Gigabit Serializer/Deserializer (SERDES) IP. The MGT transceiver includes high-speed serial-to-parallel conversion circuit, clock data recovery circuit, data encoding and decoding circuit, clock correction and channel bonding circuit, which provide physical layer foundation for various high-speed serial data transmission protocols. As illustrated in FIG. 8, the TX transmit terminal and the RX receive terminal of the MGT transceiver have independent functions, and each of them includes two sublayers: the Physical Media Attachment (PMA) and the Physical Coding Sublayer (PCS). The PMA integrates high-speed serial-to-parallel conversion circuit, pre-emphasis circuit, receiving equalization circuit, clock generation circuit, clock recovery circuit and the like. Among them, the serial-to-parallel conversion circuit is used to convert the parallel data inside the FPGA into serial data for the MGT interface. The pre-emphasis circuit compensates for the high-frequency part in the physical connection system. A high-pass filter is added at the transmit terminal to amplify the high-frequency component of the signal and thus improve the signal quality. However, the pre-emphasis circuit would increase power consumption and electromagnetic compatibility (EMC), and it is generally shielded unless necessary. The receiving equalization circuit is mainly used to compensate for the impedance difference caused by different frequencies. The clock generation circuit and the clock recovery circuit bond the clock and data at the transmit terminal and then send them, and recover the clock from the received data stream at the receive terminal. This can effectively avoid the clock jitter caused by the separate transmission of clock and data under high-speed serial transmission conditions. The PCS integrates encoding/decoding circuit, elastic buffer circuit, channel bonding circuit and clock correction circuit. (1) The encoding/decoding circuit, such as an 8B/10B encoding/decoding circuit, can effectively avoid the appearance of continuous '0' or '1' in the data stream to ensure the balance of data transmission. The channel bonding circuit is used to add K code characters to the transmitted data stream, thereby bonding multiple physically independent MGT channels into parallel channels that are synchronized in timing logic, thereby increasing the transmission throughput. The elastic buffer circuit is used to solve the problem of inconsistency between the recovered clock and the local clock, and can realize the channel bonding function by matching and aligning the K code in the buffer.

When the data to be transmitted exceeds the carrying capacity of one serial link (also called channel), multiple links need to be used simultaneously to transmit the data in parallel. As illustrated in FIG. 9, the PMA includes for example multiple channels chn0 (PMA_tx_ch0), ... , chnx (PMA_tx_chx).

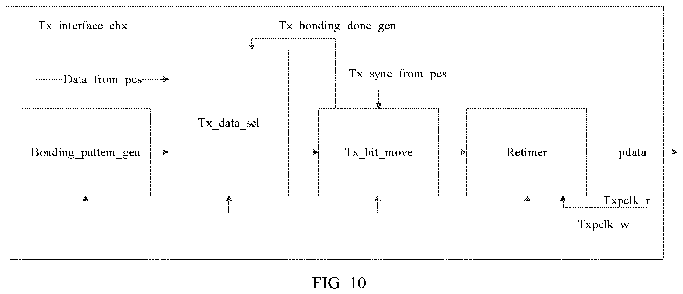

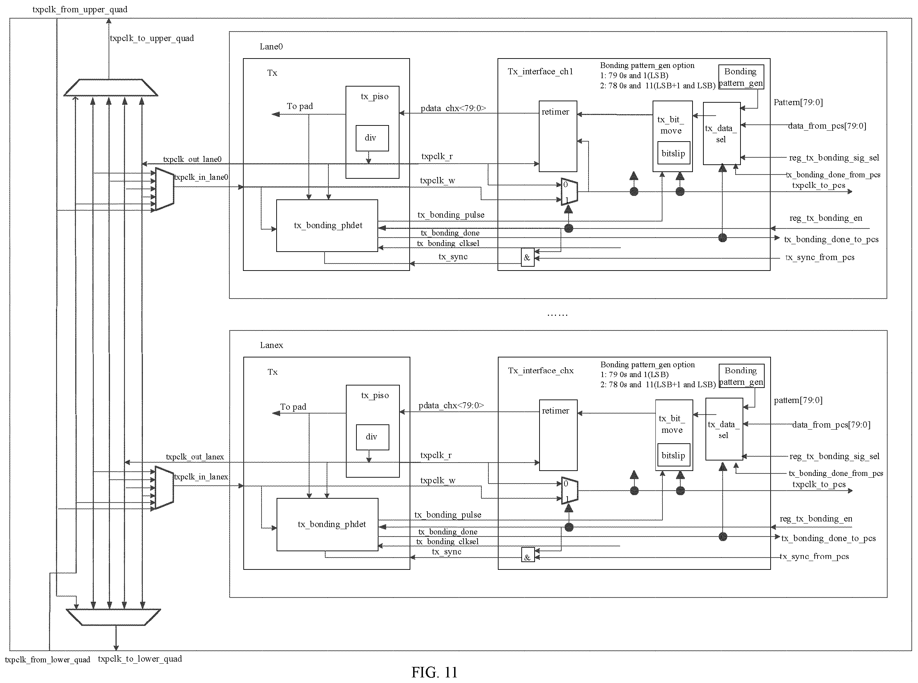

Further, as illustrated in FIG. 10 and FIG. 11, each channel of the TX transmit terminal includes a Tx_interface_chx circuit and a TX circuit.

Specifically, the Tx_interface_chx circuit is located between the PCS and the TX circuit. The Tx_interface_chx circuit includes a bonding_pattern_gen module, a tx_data_sel module, a tx_bit_move module, and a retimer module. Among them, the bonding_pattern_gen module is used to generate pattern data (also called identification data) during bonding (tx_bonding). The pattern data includes two data modes: {79'd0,1'b1} and {78' d0,2'b11}. The tx_data_sel module is used to select the data in the transmit channel (tx channel). When phase adjustment is being performed, data pattern [79:0] is selected. When normal data transmission is performed, data_from_pcs[79:0] is selected. The tx_bit_move module is used to calculate the shift value according to the number of pulses (pulse number) fed back by the TX circuit, and shift the current data. The tx_bit_move module includes a bitslip submodule which is used to perform shift processing. The retimer module is used for clock switching, which switches data from the main channel clock (txpclk_w clock) to the receive clock (txpclk_r clock) and outputs parallel data.

Based on the above, the TX circuit includes a tx_piso module and a tx_bonding_phdet module. The tx_piso module is used to convert parallel data into serial data. The tx_piso module includes a div module which is used for clock division. The tx_bonding_phdet module is used to detect the phase difference between clock and data.

In FIG. 10 and FIG. 11, the txpclk w signal is a clock signal of the main transmit channel. The txpclk_r signal is the clock signal of each transmit channel. data_from_pcs is parallel data transmitted from pcs_tx of the PCS layer. The maximum data bit width of the parallel data is for example 80, and the valid data bit width may be 8/10/16/20/32/40/64/80. reg_tx_bonding_sig_sel is used to select the signal source of tx_bonding_done, which may be represented by a 1-bit binary number. For example, 1 indicates that the signal source is user controlled, and 0 indicates that the signal source is the TX circuit. tx_bonding_done_from_pcs indicates a tx_bonding (channel bonding) completion signal, which is valid at high level and controlled by the user. txpclk _to_pcs is a clock signal given by PMA to PCS. reg_tx_bonding_en is a tx_bonding enable signal. tx_bonding_done_to_pcs comes from PMA and indicates the tx_bonding completion signal. tx_sync_from_pcs comes from the user and indicates a tx_bonding start signal. tx_bonding_pulse is a pulse signal of 3 clock cycles, which comes from the tx_bonding_phdet module in the TX circuit part and controls the tx_bit_move module to perform bit shifting. tx_bonding_done is a tx_bonding_completion signal. tx_bonding_clksel is used to indicate which clock the tx_bonding_phdet module uses to perform phase detection on the pattern data (to detect the phase difference between the data and the clock), which may be represented by a 1-bit binary number, where 0 represents the tpclk_r clock and 1 represents the txpclk_w clock.

The commonly used technology at present is to adjust the clock phase to keep the data sampling clock phases of the individual channels consistent, so as to switch the data from the txpclk_w clock to the txpclk_r clock domain and realize the simultaneous output of serial data from multiple channels. However, under this solution, the clock frequency cannot be too high, otherwise the phase adjustment would be inaccurate, thus affecting the data transmission rate. The multi-channel data bonding method provided in the embodiment of the present disclosure can solve this problem. Specifically, when multi-channel bonding is performed, first, the bonding_pattern_gen module generates pattern data and gives it to the tx_data_sel module, and the tx_data_sel module selects the pattern data for the subsequent phase detection of the multi-channel bonding. Then, the tx_bit_move module performs the phase detection and shift processing, and the data_bitslip data (shift value) obtained through the phase detection is given to the bitslip submodule for data shifting processing. Finally, the retimer module performs clock domain conversion for the data, for example, according to the phase difference between the data and each of the txpclk w and txpclk_r clocks obtained through the phase detection, it is determined whether the data is converted to the txpclk_r clock domain at the rising edge of txpelk_w or the falling edge of txpelk_w.

More specifically, the specific implementation of the multi-channel data bonding method is as follows.

Step 1: A main channel is selected before the tx channel reset signal is pulled high. Usually, the channel clock txpclk r of lane0 is selected as the main clock, and it is given to the txpclk_r port of lane0/1/2/3.../x, this takes the receive clock of the target transmit channel of multiple transmit channels as the transmit clock of each of other transmit channels of the multiple transmit channels. In addition, the register reg_tx_bonding_en signal is enabled, and a preset the shift value is configured in the register. The preset shift value includes cfg_bitslip min (the value of which ranges from 1 to half of the data effective bit width, and the default value thereof is 1, which may be adjusted according to the actual circuit) and cfg_bitslip_max (the value of which ranges from 1 to the data effective bit width, the default value thereof is half of the data effective bit width, which may be adjusted according to the actual circuit). Pattern data is used in the phase detection process. After the phase detection is completed, it automatically switches back to data_from_pcs data.

Regarding the subsequent steps, they are performed for each channel and the operations are the same, and there is no influence among the channels.

Step 2: The bonding_pattern_gen module sends the pattern data (i.e., the identification data), such as pattern ({79'd0,1'b1} or {78'd0,2'b11}), and the tx_bonding_phdet module performs phase difference detection on the pattern data.

Step 3: To avoid the cycle error problem caused by the retimer module, it is necessary to identify specific phase differences for txpclk_r and txpelk_w. If there is a phase difference, the tx_bonding_phdet module outputs a pulse signal tx_bonding_pulse to control the bitslip module to move the data according to UI (the time required for transmission of one bit of data) until the data is aligned. After the data is aligned, the tx_bonding_done signal is pulled high to indicate that the bonding is completed.

Specifically, step 3 includes for example:
1. Phase detection is performed for the txpclk_w clock and txpclk_r clock to identify the specific phase difference between the pattern data and each of txpelk_r and txpelk_w, and the final shift value is obtained through corresponding calculations.
   1) The phase detection process is started after the tx_sync_from_pcs signal jumps from a low level to a high level, and then the high level is maintained. At the same time, the tx_sync signal is pulled high, and the phase detection is performed for txpelk_r.
   2) The tx_bonding_phdet module starts working and detects the phase difference between the txpclk_r clock and the pattern data, outputs tx_bonding_pulse (the first bonding pulse signal), and accumulates the number of tx_bonding_pulses to obtain A1, which is continuously sent to the bitslip module to control bit shifting to be performed on the identification data according to A1, until the data is aligned. Then, the phdet module stops generating pulse signals, and the tx_bonding_done signal is pulled high. The number of pulses at this time is recorded as the final A1 value (the number of bonded pulses for the receive clock).
   3) After tx_bonding_done is pulled high for a certain period of time, the tx_sync signal is pulled low and the accumulator is cleared, and the tx_bonding_clksel signal is pulled low. Then, the tx_sync signal is pulled high again to release the phase detection process of the txpclk r clock, and the phase detection is performed for the txpclk_w clock.
   4) The tx_bonding_phdet module starts working and detects the phase difference, outputs tx_bonding_pulse, and accumulates the number of tx_bonding_pulses to obtain A2, which is continuously sent to the bitslip submodule to control bit shifting to be performed on the identification data according to A2 until the data is aligned. Then, the phdet module stops generating pulse signals, and the tx_bonding_done signal is pulled high. The number of pulses at this time is recorded as the final A2 value (the number of bonded pulses for the transmit clock).
   5) After the phase detection for txpclk_r and txpclk_w is completed, the tx_bonding_done_gen signal is pulled high, and then the tx channel data is switched back to data_from_pcs data.
   6) The final shift value (corresponding shift value) is calculated. For normal business data such as parallel data data _from_pcs, taking into account the boundary conditions of the switching from txpclk_w to the txpclk_r clock domain in the retimer module (i.e., a condition where phases of the txpclk_r and txpclk_w clocks are consistent and a condition where the phase difference is half a clock cycle), the final shift value may be obtained through further calculation. The calculation steps are as follows.
      (1) If A1=A2, it shows that phases of txpclk_r and txpclk_w are aligned, but there is an error of plus or minus one UI, and an intermediate variable numb_a1_a2 (the pulse number difference) is assigned a value of 0. If A1>A2, it shows that txpclk_r is later than txpclk_w by (A1-A2) UI, but there is an error of plus or minus one UI, and numb_a1_a2=data effective bit width - (A1-A2). If A1<A2, it shows that txpclk r is earlier than txpclk_w by (A1-A2)UI, but there is an error of plus or minus one UI, and numb_a1_a2 = A2-A1.
      (2) If cfg_bitslip_min<=mumb_a1_a2<=cfg_bitslip_max, data bitslip (the shift value) = data effective bit width - 1 - (cfg_bitslip_max - numb_a1_a2). If mumb_a1_a2 < cfg bitslip min, data bitslip = data effective bit width - 1 - (cfg_bitslip_max - numb_a1_a2). If mumb_a1_a2 > cfg_bitslip_max, data_bitslip = numb_a1_a2 - cfg_bitslip_max - 1.

Afterwards, the shift value data_bitslip is transmitted to the bitslip submodule for shift processing to ensure the alignment of the serial data stream in bonding multiple transmit channels. Taking the data effective bit width of 32 as an example, if data_bitslip=2, the previous data is named data_from_pcs before, and a part of the previous data data_from_pcs before[31:30] is combined with the current data, that is, the combined data {data_from_pcs[79:2], data_from_pcs _before[31:30]} is obtained, and then the combined data is given to the time reconstruction (retimer) module for clock domain conversion.

Next, the retimer module implements the clock domain conversion for data, thereby converting the data from tx_bit_move after undergoing data shifting to the txpelk_r clock domain.

When cfg_bitslip_min<=mumb_al_a2<=cfg_bitslip_max, bitslip_out_cfgrance is 0, otherwise it is 1. This signal would be given to the retimer module, which controls clock domain conversion to be performed on the data. When this signal is 0, the data is transferred from the rising edge of txpelk_w to the txpclk_r clock domain, and sampled at the rising edge of txpelk_r. When this signal is 1, the data is transferred from the falling edge of txpelk_w to the txpclk_r clock domain, latched (or captured) at the rising edge of txpclk_w, then latched at the falling edge of txpclk_w, and finally sampled at the rising edge of txpelk_r.

In this way, the entire multi-channel data bonding flow is completed, and it enables a function of aligning serial data output by multiple channels.

In summary, in the embodiment of the present disclosure, phase detection is performed on identification data of multiple transmit channels to obtain shift values, and parallel data is shifted according to the shift values; as such, the serial data output by the multiple transmit channels are aligned. This reduces the difficulty of implementing clock phase adjustment, and effectively reduces the logic complexity and timing requirements of internal digital design. In addition, it avoids the limitation that the clock frequency cannot be too high in the existing scheme of bonding multiple transmit channels, improves the data transmission rate, and improves the performance and reliability of chip.

### [Second embodiment]

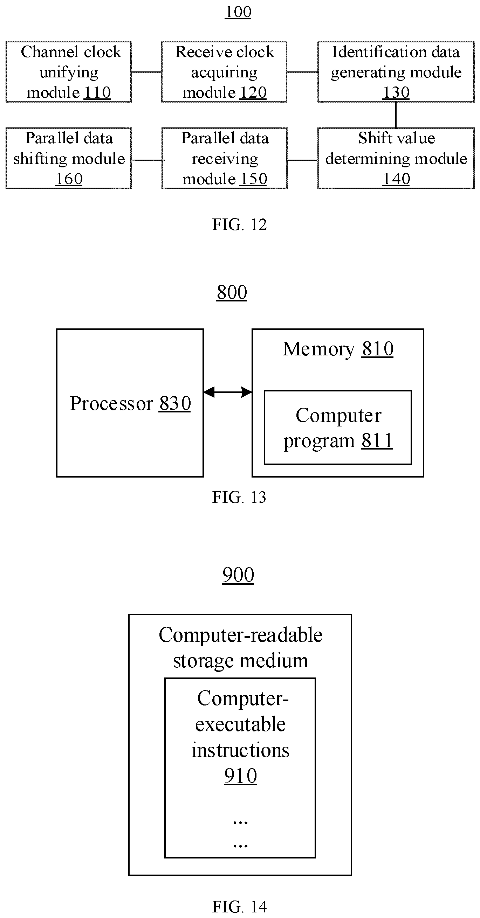

As illustrated in FIG. 12, the second embodiment of the present disclosure provides a multi-channel data bonding apparatus 100. The multi-channel data bonding apparatus 100 includes for example: a channel clock unifying module 110, a receive clock acquiring module 120, an identification data generating module 130, a shift value determining module 140, a parallel data receiving module 150 and a parallel data shifting module 160.

Specifically, the channel clock unifying module 110 is configured to use a receive clock of a target transmit channel of multiple transmit channels as a transmit clock of each of other transmit channels of the multiple transmit channels. The receive clock acquiring module 120 is configured to obtain a receive clock of each of the multiple transmit channels. The identification data generating module 130 is configured to generate identification data of each of the multiple transmit channels. The shift value determining module 140 is configured to perform phase detection on the identification data of each of the multiple transmit channels according to the transmit clock and the receive clock of each of the multiple transmit channels, and obtain the shift value of each of the multiple transmit channels. The parallel data receiving module 150 is configured to receive the parallel data of each of the multiple transmit channels. The parallel data shifting module 160 is used to shifting the parallel data of each of the multiple transmit channels according to the shift value of each of the multiple transmit channels, thereby obtaining shifted data.

The multi-channel data bonding apparatus 100 in this embodiment is used to execute the multi-channel data bonding method in the first embodiment. The specific working process and technical effects of the modules in the multi-channel data bonding apparatus 100 may refer to the description of the first embodiment, which will not be repeated here.

### [Third embodiment]

As illustrated in FIG. 13, the third embodiment of the present disclosure provides a multi-channel data bonding system 800. Typically, the multi-channel data bonding system 800 may be, for example, a video processor, a video splicer, a video switcher, or other device having video and image processing functions such as image and layer movement. The multi-channel data bonding system 800 includes for example a memory 810 and a processor 830 connected to the memory 810. The memory 810 may be for example a non-volatile memory on which a computer program 811 is stored. The processor 830 may be for example an embedded processor. When the processor 830 runs the computer program 811, the multi-channel data bonding method in the first embodiment, the second embodiment or the third embodiment is executed.

The specific working process and technical effects of the multi-channel data bonding system 800 in this embodiment may refer to the description of the first embodiment above, which will not be repeated here.

### [Fourth embodiment]

As illustrated in FIG. 14, the fourth embodiment of the present disclosure provides a computer-readable storage medium 900. The computer-readable storage medium 900 is for example a non-volatile memory, such as magnetic media (such as hard disk, floppy disk and tape), optical media (such as CDROM disks and DVDs), magneto-optical media (such as optical disk), and hardware devices specially constructed for storing and executing computer-executable instructions (such as read-only memory (ROM), random access memory (RAM), flash memory, etc.). The computer-readable storage medium 900 has computer-executable instructions 910 stored thereon. The computer-readable storage medium 900 may be used by one or more processors or processing devices to execute the computer-executable instructions 910 to implement the multi-channel data bonding method in the first embodiment, the second embodiment or the third embodiment.

In addition, it can be understood that the aforementioned embodiments are merely illustrative descriptions of the present disclosure. On the premise that the technical features do not conflict, the structures do not contradict, and the object of the present disclosure is not violated, the technical solutions of the various embodiments can be arbitrarily combined and used in combination.

In the embodiments provided in the present disclosure, it should be understood that the disclosed system, apparatus and method may be implemented in other ways. For example, the apparatus embodiment described above are merely illustrative. For example, the division of units is merely a logical function division. There may be other division methods in actual implementation. For example, multiple units or components may be combined or integrated into another system, or some features may be ignored or not executed. In addition, the mutual coupling or direct coupling or communication connection shown or discussed may be indirect coupling or communication connection through some interface, device or unit, which may be electrical, mechanical or in other forms.

The units described as separate components may or may not be physically separated, and components shown as units may or may not be physical units, that is, they may be located in one place or may be distributed over multiple network units. Some or all of the units may be selected according to actual needs to achieve the purpose of the solutions of the embodiments.

Finally, it should be noted that the above embodiments are only used to illustrate the technical solutions of the present disclosure, rather than to limit it. Although the present disclosure has been described in detail with reference to the aforementioned embodiments, those skilled in the art should understand that they can still modify the technical solutions described in the aforementioned embodiments, or make equivalent replacements for some of the technical features therein. However, these modifications or replacements do not deviate the essence of the corresponding technical solutions from the spirit and scope of the technical solutions of the embodiments of the present disclosure.

## Claims

1. A multi-channel data bonding method, comprising:
using a receive clock of a target transmit channel of a plurality of transmit channels as a transmit clock of each of other transmit channels of the plurality of transmit channels;
acquiring a receive clock of each of the plurality of transmit channels;
generating identification data of each of the plurality of transmit channels;
obtaining a shift value of each of the plurality of transmit channels, by performing phase detection on the identification data of the transmit channel according to the transmit clock and the receive clock of the transmit channel;
receiving parallel data of each of the plurality of transmit channels; and
shifting the parallel data of each of the plurality of transmit channels according to the shift value of the transmit channel, thereby obtaining shifted data.

2. The multi-channel data bonding method as claimed in claim 1, wherein the obtaining a shift value of each of the plurality of transmit channels by performing phase detection on the identification data of the transmit channel according to the transmit clock and the receive clock of the transmit channel, comprises:
detecting a phase difference between the receive clock of the target transmit channel and the identification data of the target transmit channel, and determining the number of bonded pulses for the receive clock of the target transmit channel;
detecting a phase difference between the transmit clock of the target transmit channel and the identification data of the target transmit channel, and determining the number of bonded pulses for the transmit clock of the target transmit channel; and
determining a shift value of the target transmit channel, according to the number of bonded pulses for the receive clock and the number of bonded pulses for the transmit clock.

3. The multi-channel data bonding method as claimed in claim 2, wherein the detecting a phase difference between the receive clock of the target transmit channel and the identification data of the target transmit channel and determining the number of bonded pulses for the receive clock of the target transmit channel, comprises:
outputting a first bonding pulse signal, and counting the first bonding pulse signal;
shifting the identification data according to the first bonding pulse signal; and
recording a counted number of the first bonding pulse signal obtained when the identification data is aligned, as the number of bonded pulses for the receive clock.

4. The multi-channel data bonding method as claimed in claim 2, wherein the detecting a phase difference between the transmit clock of the target transmit channel and the identification data of the target transmit channel and determining the number of bonded pulses for the transmit clock of the target transmit channel, comprises:
outputting a second bonding pulse signal, and counting the second bonding pulse signal;
shifting the identification data according to the second bonding pulse signal; and
recoding a counted number of the second bonding pulse signals obtained when the identification data is aligned, as the number of bonded pulses for the receive clock.

5. The multi-channel data bonding method as claimed in claim 2, wherein the determining a shift value of the target transmit channel according to the number of bonded pulses for the receive clock and the number of bonded pulses for the transmit clock, comprises:
obtaining, through comparison, a pulse number difference between the number of bonded pulses for the receive clock and the number of bonded pulses for the transmit clock; and
determining the shift value, according to the pulse number difference and a preset shift value range.

6. The multi-channel data bonding method as claimed in claim 1, wherein the shifting the parallel data of each of the plurality of transmit channels according to the shift value of the transmit channel and thereby obtaining shifted data, comprises:
obtaining combined data, by performing combination processing according to the shift value, parallel data of a current clock cycle, and parallel data of a previous clock cycle before the current clock cycle; and
converting a clock of the combined data from the transmit clock to the receive clock.

7. The multi-channel data bonding method as claimed in claim 6, wherein the obtaining combined data by performing combination processing according to the shift value, parallel data of a current clock cycle and parallel data of a previous clock cycle before the current clock cycle, comprises:
acquiring multi-bit data from previous cycle data of the previous clock cycle before the current clock cycle, wherein the number of bits of the multi-bit data is equal to the shift value; and
obtaining the combined data by combining the multi-bit data with current cycle data of the current clock cycle.

8. A multi-channel data bonding apparatus, comprising:
a channel clock unifying module, configured to use a receive clock of a target transmit channel of a plurality of transmit channels as a transmit clock of each of other transmit channels of the plurality of transmit channels;
a receive clock acquiring module, configured to acquire a receive clock of each of the plurality of transmit channels;
an identification data generating module, configured to generate identification data of each of the plurality of transmit channels;
a shift value determining module, configured to obtain a shift value of each of the plurality of transmit channels, by performing phase detection on the identification data of the transmit channel according to the transmit clock and the receive clock of the transmit channel;
a parallel data receiving module, configured to receive parallel data of each of the plurality of transmit channels; and
a parallel data shifting module, configured to shift the parallel data of each of the plurality of transmit channels according to the shift value of the transmit channel, thereby obtaining shifted data.

9. A multi-channel data bonding system, comprising a processor and a memory connected to the processor, wherein the memory stores instructions executable by the processor, and the instructions cause the processor to perform the multi-channel data bonding method as claimed in any one of claims 1 to 7.

10. A computer-readable storage medium, wherein the computer-readable storage medium is a non-volatile memory and stores thereon computer-executable instructions, wherein the computer-executable instructions are used to execute the multi-channel data bonding method as claimed in any one of claims 1 to 7.
